(19) **Europäisches Patentamt**
**European Patent Office**
**Office européen des brevets**

(11) **EP 2 380 448 A1**

(12) **EUROPEAN PATENT APPLICATION**
published in accordance with Art. 153(4) EPC

(43) Date of publication:
**26.10.2011 Bulletin 2011/43**

(51) Int Cl.:
*A23L 2/00* (2006.01)   *A23L 2/38* (2006.01)

(21) Application number: **10729198.1**

(22) Date of filing: **05.01.2010**

(86) International application number:
**PCT/JP2010/050027**

(87) International publication number:
**WO 2010/079778 (15.07.2010 Gazette 2010/28)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **08.01.2009 JP 2009002732**

(71) Applicant: **KIRIN BEER KABUSHIKI KAISHA Chuo-Ku
Tokyo 104-8288 (JP)**

(72) Inventors:
• **KATAYAMA Takayoshi
Tokyo 104-8288 (JP)**

• **ITAKURA Takehito
Tokyo 104-8288 (JP)**
• **OTA Takehito
Tokyo 104-8288 (JP)**
• **KITO Hideaki
Tokyo 104-8288 (JP)**

(74) Representative: **HOFFMANN EITLE
Patent- und Rechtsanwälte
Arabellastraße 4
81925 München (DE)**

(54) **IMPROVEMENT OF FLAVOR OF UNFERMENTED BEER-FLAVORED MALT BEVERAGE**

(57)   A method for producing an unfermented beer-flavored malt beverage according to the present invention comprises adjusting linalool, and acetaldehyde concentrations in a malt beverage to be improved in flavor to thereby impart or enhance a fermentation flavor in the beverage. The present invention also relates to a malt beverage having an improved flavor and a flavor improving agent. According to the present invention, a well-balanced fermentation flavor can be imparted or enhanced in an unfermented beer-flavored malt beverage to thereby improve the flavor of the beverage.

EP 2 380 448 A1

**Description**

<u>CROSS-REFERENCE TO RELATED APPLICATION</u>

The present application is based on the prior Japanese Patent Application No. 2009-002732 (filing date: January 8, 2009) and claims the benefit of the priority thereof. The contents of the disclosure thereof are incorporated herein by reference in its entirety.

<u>TECHNICAL FIELD</u>

The present invention relates to improvement in the flavor of an unfermented beer-flavored malt beverage. More specifically, the present invention relates to a method for producing an unfermented beer-flavored malt beverage, comprising imparting or enhancing a well-balanced fermentation flavor in an unfermented beer-flavored malt beverage to thereby improving the flavor of the beverage, a thereby-obtained unfermented beer-flavored malt beverage having an improved flavor, and a flavor improving agent.

<u>BACKGROUND ART</u>

As health consciousness has risen in recent years, increasing numbers of people self-control alcohol intakes. Also, the revision of the Road Traffic Act, such as strengthened penalties for drunk driving, has aroused an interest in the alcohol consumption of people involved in the operation of cars or the like. Under such circumstances, there has been a more and more growing demand for low-alcoholic or non-alcoholic beer-flavored malt beverages.

In conventional low-alcoholic beer-flavored malt beverages, the flavor of beer is imparted by performing fermentation using yeast, as in usual beer beverages. At the same time, their alcohol contents are reduced. This is because the low-alcoholic malt beverages, for which consumers expect a beer-like taste and aroma, have been considered to be difficult to produce by completely eliminating alcohol fermentation. Thus, the conventional low-alcoholic beer-flavored malt beverages are produced based on the premise that the fermentation using yeast is performed. Accordingly, previous studies have been made on methods of improving the metabolic process of yeast or effectively removing alcohol from fermentation products.

However, any of such conventional techniques were premised on the fermentation using yeast. In actuality, it was impossible to completely remove alcohol from products. Thus, the conventional low-alcoholic beer-flavored malt beverages are not suitable for drinking by people who do not want to consume alcohol or operators of cars or the like.

On the other hand, worts produced from malt by merely eliminating fermentation using yeast may be used as final products. Such unfermented worts have a unique flavor (wort flavor) and generally, are not suitable for drinking. Specifically, this wort flavor leaves a strong aftertaste after drinking and adversely affects even the taste of the resulting beverage. Thus, the unfermented worts are not directly applied to beverages except that they are consumed as Ameyu (Japanese thick malt syrup poured into boiling water and sprinkled with cinnamon).

The wort flavor is derived from aldehydes that are formed by thermal decomposition in the wort preparation procedure, particularly, boiling. These aldehydes are known as causative substances of malt syrup-like smell, grain-like smell, or the like. These aldehydes, in usual beers, are drastically reduced through metabolism by yeast in the fermentation procedure.

Moreover, in the production of usual beers, a fermentation flavor generated along with fermentation is imparted to the beers as a result of subjecting a wort supplemented with hops to a fermentation treatment. This flavor is an important factor as a preferred flavor (deliciousness) unique to beers.

Thus, the fermentation treatment using yeast is an important process in terms of a reduced wort flavor and an imparted fermentation flavor, for obtaining beer-flavored beverages. However, it is difficult to completely remove alcohol formed by fermentation using yeast, as described above.

Moreover, in fact, the wort flavor may be reduced by some means in the preparation of a malt beverage mainly composed of a wort. Even in such a case, it may usually be difficult to impart a fermentation flavor to the beverage without using the fermentation treatment, because, originally, the fermentation flavor unique to beers is specifically obtained by the fermentation treatment.

For example, Japanese Patent Laid-Open Publication No. S 62-272965, Japanese Patent Laid-Open Publication No. H 4-45777, and International Publication No. WO 2004/018612 disclose a method comprising adding a particular substance for imparting a beer flavor to diluted beer or low-alcoholic malt beverages.

Moreover, Japanese Patent Laid-Open Publication No. 2003-250503 discloses a beer-flavored carbonated beverage supplemented with malt extracts and sugars. However, in this patent document, an exceedingly small amount of malt extracts is used merely for flavor. Thus, a beer-flavored malt beverage that is mainly composed of an unfermented wort and has a fermentation flavor unique to beers has been unknown so far as long as the present inventors know.

Furthermore, National Publication of International Patent Application No. 2001-520876 (WO 99/21956) proposes the addition of rose oxide and/or 1,5-octadien-3-one as hop aroma ingredients as a method of improving the flavor of fermented beverages including beer. However, the issue discussed therein is improvement in bitterness characteristic of a hop aroma in fermented beverages and is different from the fermentation flavor intended by the present inventors.

Linalool is contained in hop essential oils. For example, Japanese Patent Laid-Open Publication No. 2004-194590 discloses a food or beverage having a relaxing effect, containing (R)-linalool.

Regarding use of aldehydes in beverages, for example, Japanese Patent Laid-Open Publication No. S 62-024851 discloses a method comprising adding phenylacetaldehyde to a beverage of taste such as coffee or black tea to thereby improve its aroma.

However, none of these documents disclose a fermentation flavor unique to beers and improvement thereof by any means.

SUMMARY OF THE INVENTION

An object of the present invention is to provide a method for producing unfermented beer-flavored malt beverage having an improved flavor, comprising imparting or enhancing a well-balanced fermentation flavor in an unfermented beer-flavored malt beverage to thereby improve the flavor of the beverage, a thereby-obtained malt beverage having an improved flavor, and a flavor improving agent.

The present inventors have now unexpectedly succeeded in imparting a well-balanced beer-flavored fermentation flavor to a malt beverage obtained from an unfermented wort, by adding thereto linalool and acetaldehyde such that the beverage has linalool and acetaldehyde concentrations within predetermined ranges. As described above, linalool is an ingredient contained in hop essential oils and is known to have a relaxing effect. However, its relation to the fermentation flavor has not necessarily been recognized. Moreover, acetaldehyde is an ingredient contained in beer-like products. It has rather been considered that the acetaldehyde should be avoided as much as possible due to its smell. Under such circumstances, the findings were surprising to the present inventors that by using only these two ingredients in combination, a well-balanced, excellent beer-like fermentation flavor can be imparted or enhanced in an unfermented beer-flavored malt beverage produced from a wort without undergoing a fermentation treatment. The unfermented malt beverage thus obtained was an unprecedented unfermented malt beverage that has a rich fermentation flavor and has flavor and taste closer to beer. Furthermore, the present inventors have also succeeded in adjusting the amount of hop-derived linalool in a beverage as a product, by adjusting an amount of hop added to a wort and the timing of its addition during a process of preparing the wort. Te present invention is based on these findings.

A method for producing an unfermented beer-flavored malt beverage according to the present invention comprises adjusting linalool, and acetaldehyde concentrations in a malt beverage to be improved in flavor to thereby impart or enhance a fermentation flavor in the beverage.

The method for producing an unfermented beer-flavored malt beverage according to the present invention comprises adding linalool and acetaldehyde to the malt beverage to be improved in flavor to thereby impart or enhance a fermentation flavor in the beverage.

Preferably, the production method according to the present invention comprises adding linalool and acetaldehyde to the malt beverage to be improved in flavor such that the obtained malt beverage has linalool and acetaldehyde concentrations each effective for improvement in flavor.

More preferably, the production method according to the present invention comprises adjusting linalool and acetaldehyde concentrations in the malt beverage to be improved in flavor such that the obtained malt beverage has linalool and acetaldehyde concentrations of 1 to 125 $\mu$g/L and 1 to 50 mg/L, respectively.

Even more preferably, the production method according to the present invention comprises adding linalool and acetaldehyde to the malt beverage to be improved in flavor such that the obtained malt beverage has linalool and acetaldehyde concentrations of 1 to 125 $\mu$g/L and 1 to 50 mg/L, respectively.

According to a preferable aspect of the present invention, the production method according to the present invention comprises adding linalool and acetaldehyde to the malt beverage to be improved in flavor such that the obtained malt beverage has linalool and acetaldehyde concentrations that each satisfy the following relations (A):

$$150Ln \geq -A + 10 \text{ and } 1000Ln \leq -3A + 150 \dots (A),$$

wherein

Ln represents a linalool concentration (mg/L) (Ln > 0) in the malt beverage, and

A represents an acetaldehyde, concentration (mg/L) (A > 0) in the malt beverage.

According to a more preferable aspect of the present invention, the production method according to the present invention comprises adding linalool and acetaldehyde to the malt beverage to be improved in flavor such that the obtained malt beverage has linalool and acetaldehyde concentrations of 11 to 13 μg/L and 9 to 11 mg/L, respectively.

According to a preferable aspect of the present invention, the production method according to the present invention comprises adjusting an amount of hop added to a wort and the timing of its addition during a process of preparing the wort used in the malt beverage to thereby adjust the amount of linalool derived from the hop, and then further adding linalool, if necessary, to the malt beverage to thereby adjust the linalool concentration of the malt beverage to be improved in flavor.

According to a preferable aspect of the present invention, in the production method according to the present invention, the malt beverage to be improved in flavor is obtained by reducing a wort flavor from an unfermented wort.

Moreover, according to an alternative aspect of the present invention, there is provided an unfermented beer-flavored malt beverage produced by the production method according to the present invention.

Moreover, according to a further alternative aspect of the present invention, there is provided a flavor improving agent which imparts a fermentation flavor to a beer-flavored malt beverage, the flavor improving agent comprising linalool and acetaldehyde.

According to another preferable aspect of the present invention, the malt beverage is an unfermented malt beverage obtained by reducing a wort flavor from an unfermented wort.

According to the present invention, a delicious unfermented malt beverage that has a rich, excellent fermentation flavor and has flavor and taste closer to beer can be achieved by improving the flavor of an unfermented malt beverage obtained from a wort without undergoing a fermentation treatment using yeast. The beverage obtained by improving the flavor according to the present invention is virtually totally free from alcohol and is, therefore, basically different from conventional commercially available low-alcoholic beer-flavored beverages. Thus, the beverage according to the present invention is drinkable for the operators of vehicles without problems in traffic regulations. Moreover, also from the viewpoint of appropriate drinking, the beverage according to the present invention gives consumers psychological satisfaction as if they drink beer without getting drunk and thus, can also be expected to serve as an option on a quit drinking day as a substitute for beer-type beverages to thereby produce the effect of promoting the health of both mind and body and suppressing health damage attributed to excessive consumption of beer. Accordingly, the beverage according to the present invention is a malt beverage obtained using an unfermented wort without undergoing a fermentation treatment. Nevertheless, the beverage according to the present invention is advantageous in that it has an excellent beer-like fermentation flavor and can satisfy the consumer need for both of an alcohol-free beverage and a fermentation flavor, which have not been compatible with each other so far.

DETAILED DESCRIPTION OF THE INTENTION

Definitions

In the present invention, the term "malt beverage" means a beverage mainly composed of a wort and includes refreshing malt beverages that are given a refreshing feeling derived from carbon dioxide or the like.

Moreover, in this context, the term "fermentation flavor," (or taste of fermentation) refers to a flavor unique to fermented beverages, which is possessed by beer-flavored beverages as a result of the fermentation treatment of a wort using yeast or the like. The presence of this fermentation flavor influences the flavor or taste of a beer-flavored malt beverage. A beverage excellent in beer-like fermentation flavor can provide deliciousness equivalent or close to beer and a rich taste to consumers.

In the present invention, the term "beer flavor" refers to a taste or aroma unique to beer which is obtained by usual production, i.e., production based on fermentation using yeast or the like.

In this context, the term "malt beverage to be improved in flavor" refers to a malt beverage that is mainly composed of a wort without undergoing a fermentation treatment using yeast or the like and lacks a beer-like fermentation flavor or is desired to be improved in fermentation flavor. In the present invention, the "malt beverage to be improved in flavor" used is mainly composed of an unfermented wort. Thus, the unfermented malt beverage obtained by improving the flavor is totally free from alcohol ingredients derived from fermentation.

Moreover, the "improvement in flavor" encompasses imparting of a fermentation flavor to a beverage having no or a few perceptible fermentation flavors as well as enhancement of a fermentation flavor in a beverage having a weakly or insufficiently perceptible fermentation flavor. The "improvement in flavor" further encompasses even achievement of a more balanced fermentation flavor by further improving the balance of flavors derived from various tastes, aromas or odors, and the like contained in a beverage, albeit having a perceptible fermentation flavor.

In the present invention, the term "completely non-alcoholic" means that alcohol is completely absent, i.e., an alcohol content is 0% by weight.

"Linalool" is one kind of monoterpene alcohol and is generally known as one fragrance known to have a lily-of-the-valley-, lavender-, or bergamot-like aroma. It is also known that the linalool is contained in hop essential oils obtained from hops used in beer production. Thus, the linalool can be obtained by extraction from these plants. Alternatively, it is also known that the linalool may be synthesized industrially with, for example, pinene, acetylene and acetone, or isoprene as starting materials. In the present invention, a commercially available product can be used, if necessary, as the linalool.

In the present invention, the term "worst flavor" means a flavor (odor) unique to an unfermented wort. Examples of such a flavor unique to an unfermented wort include an unpleasant flavor such as malt syrup-like smell or grain-like smell generated by thermal decomposition in the boiling of a wort (also referred to as "an unpleasant wort flavor" in the present specification). These smells are probably derived from various aldehydes such as phenylacetaldehyde, methional, and furfural.

In the present invention, linalool and acetaldehyde concentrations in a wort or a beverage can be measured by a method known in the art. For example, the linalool concentration can be measured using GC/MS or the like, while the acetaldehyde concentration can be measured using a Headspace gas chromatograph equipped with an FID detector. In this context, any commercially available apparatus may be used without problems in GC/MS. More specifically, they can each be measured by, for example, measurement methods described later in Examples.

Improvement in flavor of malt beverage

As described above, according to the present invention, there is provided a method for producing an unfermented beer-flavored malt beverage, comprising adjusting linalool and acetaldehyde concentrations in a malt beverage to be improved in flavor to thereby impart or enhance a fermentation flavor in the beverage. Preferably, according to the present invention, there is provided the method for producing an unfermented beer-flavored malt beverage, wherein the fermentation flavor is imparted or enhanced in the beverage by adding linalool and acetaldehyde to the malt beverage to be improved in flavor. According to an alternative aspect of the present invention, there is also provided a method of improving the flavor of an unfermented beer-flavored malt beverage, comprising adding linalool and acetaldehyde to a malt beverage to be improved in flavor to thereby impart or enhance a fermentation flavor in the beverage.

In this context, the malt beverage to be improved in flavor is derived from an unfermented wort without undergoing a fermentation treatment and is obtained by further reducing a wort flavor, if necessary. More specifically, the malt beverage to be improved in flavor can be produced by preparing a wort, subjecting, if necessary, the wort to a wort flavor reduction treatment to reduce the flavor, and filtering the obtained wort.

In this context, the procedure of reducing a wort flavor is not essential for obtaining the malt beverage to be improved in flavor and is arbitrarily performed. Thus, the method according to the present invention can also be applied to beverages derived from worts that are not subjected to such a reduction treatment. In this case, the method of the present invention can produce both a wort flavor reducing effect and a fermentation flavor enhancing effect. The reason why even such a wort flavor reducing effect can also be expected is probably that the present invention produces the effect of improving the balance of flavors including a fermentation flavor.

Hereinafter, the process of preparing a wort-derived malt beverage will be described specifically in the order of the preparation of a wort, the arbitrary wort flavor reduction treatment, and the filtration of the malt beverage.

First, the preparation of a wort can be performed according to a conventional method. For example, the wort can be obtained by (a) mashing a mixture of malt grist and water, followed by filtration to obtain a wort, (b) adding hop to the obtained wort and then boiling the mixture, and (c) cooling the boiled wort.

In step (a), the malt grist can be any of those obtained by germinating barley, for example, two-rowed barley, by a conventional method and drying this germinated barley, which is then ground into a predetermined particle size.

The mixture of malt grist and water may be supplemented with an adjunct. Examples of the adjunct include rice, corn starch, corn grits, sugars (e.g., liquid sugar syrup such as high fructose corn syrup), and dietary fiber. When the adjunct is sugars, these sugars may be added to the wort after mashing or filtration. Moreover, water may be mixed in the whole amount with malt grist. Alternatively, a portion of water is mixed with malt grist, and the remaining portion may be added in the whole amount or in divided portions to the wort after mashing. The proportions of the malt grist, the adjunct, and water constituting the wort can be determined appropriately.

The proportions of the malt grist, the adjunct, and water constituting the wort can be determined appropriately. The proportions of the malt grist, the adjunct, and water may be determined such that the wort obtained after step (c) has a sugar content of 3 to 20%, preferably 7 to 14%. The proportions of the malt grist, the adjunct, and water can be set to, for example, 0 to 100 parts by weight of the adjunct and 400 to 2000 parts by weight of water, preferably 0 to 30 parts by weight of the adjunct and 600 to 1300 parts by weight of water, with respect to 100 parts by weight of the malt grist. When the adjunct is high fructose corn syrup and dietary fiber, the proportions of the malt grist, the adjunct, and water can be set to, for example, 10 to 40 parts by weight of the adjunct and 800 to 1500 parts by weight of water, preferably 20 to 30 parts by weight of the adjunct and 1000 to 1200 parts by weight of water, with respect to 100 parts by weight of the malt grist. In this case, the weight ratio (solid content) between the high fructose corn syrup and the dietary fiber can be set to 1:0.1 to 10.

The mashing and filtration of the mixture can be carried out according to a conventional method.

In step (b), hop is added to the wort obtained in step (a). Then, the mixture can be boiled to thereby bring out the flavor and aroma of the hop. After the boiling, residues such as proteins formed by precipitation may be removed. In this context, the amount of the hop added to the wort can be, for example, approximately 0.01 to 0.5% by weight with respect to the amount of the wort.

In step (c), the boiled wort is cooled. The cooling is preferably performed to a temperature as low as possible without freezing the wort, usually 1 to 5°C.

The wort may be supplemented, if necessary, with additives such as a dye, a foaming agent, and a foam stability improving agent. These additives may be added to the wort before mashing or after mashing or filtration.

If necessary, the adjustment of linalool, and acetaldehyde concentrations (preferably, the addition of linalool and acetaldehyde) in the method according to the present invention may be performed at this stage, or the addition thereof may be performed partially at this stage.

Alternatively, in the present invention, the amount of hop-derived linalool in the obtained wort in the step (b) can be adjusted by adjusting the duration of the procedure after the addition of the hop to the wort or adjusting the amount of the hop added. If the amount of the hop added is the same, a longer boiling time after the addition of the hop to the wort tends to more increase the linalool concentration. The linalool, tends to exhibit the highest concentration in the wort that is being left standing after the completion of the boiling treatment. Thus, in the present invention, the linalool concentration in the beverage can be adjusted close to that of interest in the beverage by adjusting the boiling time of the wort after the hop addition. When the concentration does not reach that of interest, linalool may be added thereto as appropriate.

Moreover, in the present invention, the linalool, concentration in a beverage product can also be adjusted by adding hop essential oils (hop extracts) to the wort. Furthermore, the linalool, concentration of interest in the beverage can also be achieved by adjusting the boiling time of the hop-supplemented wort, the amount of the hop added, the amount of the hop essential oils added, and the amount of the linalool added in combination.

In the present invention, the wort thus prepared can be subjected, if necessary, to a wort flavor reduction treatment to appropriately reduce a wort flavor in the wort. The method of reducing a wort flavor in the wort is not particularly limited as long as it can remove or reduce the flavor from the wort. For example, the flavor can be removed or reduced by bubbling during fermentation as proposed by Japanese Patent Laid-Open Publication No. 2005-013142. Alternatively, the wort flavor may be removed or reduced by adsorption using various adsorbents or the like.

The wort thus subjected, if necessary, to the wort flavor reduction treatment can be filtered to remove unnecessary proteins or adsorbents. The filtration can be performed according to a conventional method and can be preformed preferably using a diatomaceous earth filter. For the filtration, the wort may be diluted, if necessary, by the addition of degassed water in advance to adjust the sugar content to 3 to 8%.

After the filtration, procedures performed in the production of usual beer or sparkling liquors can be performed appropriately, for example, adjustment of final concentrations with degassed water or the like, inclusion of carbon dioxide, pasteurization, charging (packaging) into containers (e.g., barrels, bottles, or cans), and labeling of the containers.

When the method according to the present invention comprises adding linalool and acetaldehyde, this addition can be performed at any stage after the preparation of the wort and before the final procedures such as sterilization or packaging of products. For example, the addition may be performed after the arbitrary wort flavor reduction treatment stage and before the final procedures such as packaging of products.

Moreover, for the addition of linalool, the linalool is dissolved in advance in a solvent, and this solution can be added to the wort of interest. This solvent for dissolving the linalool is a solvent other than ethanol and is selected from among solvents that can be added to beverages and are not harmful to human bodies or the like. Examples of such solvents include propylene glycol.

According to a preferable aspect of the present invention, the method according to the present invention comprises adding linalool and acetaldehyde to the malt beverage to be improved in flavor such that the obtained malt beverage has linalool and acetaldehyde concentrations each effective for improvement in flavor.

In this context, the concentrations effective for improvement in flavor refer to the ranges of linalool and acetaldehyde concentrations in the malt beverage having an improved flavor, i.e., having an appropriate imparted fermentation flavor. Whether these concentrations fall within their respective concentration ranges can be determined easily, for example, by sensory evaluation shown in Examples described later. In the present invention, linalool and acetaldehyde are added, as appropriate, to the malt beverage to be improved in flavor such that the obtained malt beverage has such concentrations effective for improvement in flavor.

Since linalool is also obtained from hop essential oils, a hop-derived floral flavor in the beverage tends to be enhanced with increase in linalool, concentration. On the other hand, acetaldehyde tends to cause an unpleasant odor exceeding a fermentation flavor at too high a concentration, as is evident from the fact that aldehydes are also contained in a wort flavor. Linalool and acetaldehyde used in too small amounts cannot produce a sufficient fermentation flavor, whereas linalool and acetaldehyde used in too large amounts produce too strong a fermentation flavor, which gradually becomes an odor undesirable for consumers. Moreover, equal amounts of linalool and acetaldehyde used are not preferable. Their appropriate, well-balanced presences can produce an excellent fermentation flavor having a well-balanced beer-like fermentation flavor (good balance of flavors).

According to a preferable aspect of the present invention, for example, the obtained malt beverage can have linalool and acetaldehyde concentrations of 0.8 to 150 μg/L (or ppb) and 0.8 to 60 μg/L (or ppm), respectively. According to a more preferable aspect of the present invention, the obtained malt beverage can have linalool and acetaldehyde concentrations of 1 to 125 μg/L (or ppb) and 1 to 50 mg/L (or ppm), respectively. Even more preferably, the obtained malt beverage has linalool and acetaldehyde concentrations that are effective for improvement in flavor and are selected from 1 to 125 μg/L (or ppb) and 1 to 50 mg/L (or ppm), respectively.

According to a further preferable aspect of the present invention, the linalool concentration effective for improvement in flavor is 1 to 120 μg/L, preferably 1 to 100 μg/L, more preferably 1 to 72 μg/L, even more preferably 1 to 60 μg/L, further more preferably 1 to 50 μg/L, further more preferably 1 to 43.2 μg/L, further more preferably 1 to 36 μg/L, further more preferably 1.6 to 36 μg/L, further more preferably 2 to 36 μg/L, further more preferably 2 to 30 μg/L or 4.8 to 36 μg/L, further more preferably 6 to 30 μg/L, further more preferably 6.4 to 21.6 μg/L, further more preferably 8 to 18 μg/L, further more preferably 9.6 to 18 μg/L, further more preferably 9.6 to 15 μg/L, particularly preferably 9.6 to 14.4 μg/L, particularly more preferably 10 to 14 μg/L, further more particularly preferably 11 to 13 μg/L, most preferably 12 μg/L.

Moreover, in this case, the acetaldehyde concentration effective for improvement in flavor is 1.6 to 48 mg/L, preferably 2 to 48 mg/L, more preferably 2 to 40 mg/L, even more preferably 3 to 40 mg/L, further more preferably 4 to 36 mg/L, further more preferably 4 to 30 mg/L, further more preferably 5 to 30 mg/L, further more preferably 5 to 25 mg/L, further more preferably 6.4 to 18 mg/L, further more preferably 8 to 15 mg/L, particularly preferably 8 to 12 mg/L, particularly more preferably 9 to 11 mg/L, most preferably 10 mg/L.

The concentrations effective for improvement in flavor according to the present invention are selected from combinations of such ranges of linalool and acetaldehyde concentrations.

According to a further alternative preferable aspect of the present invention,

the obtained malt beverage has an acetaldehyde concentration of 4 to 60 mg/L when the linalool concentration is 0.8 to 72 μg/L, and

the obtained malt beverage has an acetaldehyde concentration of 0.8 to 60 mg/L when the linalool concentration is 48 to 150 μg/L. More preferably,

the obtained malt beverage has an acetaldehyde concentration of 5 to 50 mg/L when the linalool concentration is 1 to 60 μg/L, and

the obtained malt beverage has an acetaldehyde concentration of 1 to 50 mg/L when the linalool concentration is 60 to 120 μg/L. Particularly preferably,

the obtained malt beverage has an acetaldehyde concentration of 5 to 25 mg/L when the linalool concentration is 1 to 60 μg/L, and

the obtained malt beverage has an acetaldehyde concentration of 1 to 25 mg/L when the linalool concentration is 60 to 120 μg/L.

According to a preferable aspect of the present invention, the method according to the present invention comprises adjusting the linalool, and acetaldehyde concentrations such that the obtained malt beverage has linalool and acetaldehyde concentrations that each satisfy the relations (A). The former of these relations is calculated based on the linalool concentration of 60 μg/L and the acetaldehyde concentration of 1 mg/L as well as the linalool concentration of 0 μg/L and the acetaldehyde concentration of 10 mg/L in Examples described later. The latter expression is calculated based on the linalool concentration of 120 μg/L and the acetaldehyde concentration of 12 mg/L as well as the linalool concentration of 0 μm/L and the acetaldehyde concentration of 60 mg/L in Examples described later. The latter expression can be, preferably $1000Ln < -3A + 150$.

According to a further more preferable aspect of the present invention, the obtained malt beverage has linalool and acetaldehyde concentrations of 6 to 30 μg/L and 5 to 25 mg/L, more preferably 9.6 to 18 μg/L and 8 to 15 mg/L, even more preferably 9 to 11 μg/L and 9 to 11 mg/L, most preferably 12 μg/L and 10 mg/L, respectively.

According to an alternative aspect of the present invention, there is provided an unfermented beer-flavored malt beverage that is produced by the method according to the present invention such that the unfermented beer-flavored malt beverage has an improved fermentation flavor, as described above.

According to a further alternative aspect of the present invention, there is provided a flavor improving agent which imparts a fermentation flavor to a beer-flavored malt beverage, the flavor improving agent comprising linalool, and acetaldehyde, as described above. Preferably, the malt beverage is an unfermented malt beverage obtained by reducing a wort flavor from an unfermented wort. More preferably, in this context, the linalool and the acetaldehyde are contained in amounts that give concentrations each effective for improvement in flavor in a malt beverage to be improved in flavor.

EP 2 380 448 A1

EXAMPLES

Hereinafter the present invention will be specifically described in the following examples. However, these examples are not intended to limit the scope of the present invention.

Example 1: Preparation of completely non-alcoholic beer-flavored beverage

(1) Preparation of wort

200 kg of malt grist and 700 L of hot water were added to a mash tun and mixed. The mixture was mashed at 50 to 76°C. After the completion of the mashing procedure, the resulting product was filtered in a wort filtering chamber to obtain a clear wort as a filtrate thereof.
The obtained wort was transferred to a boiling vessel, to which 80 kg (in terms of solid content) of adjuncts mainly composed of liquid sugar syrup was then added. 1 kg of hop was further added thereto, and the mixture was boiled at 100°C. The boiled wort was placed in a whirlpool bath. Residues such as proteins formed by precipitation were removed. To this boiled wort, hot water was added to adjust its sugar content to 7%.
The obtained wort was cooled to 4°C on a plate cooler to obtain 1,800 L of a wort used for drinking. The density at 20°C measured using an oscillator densitometer was defined as a sugar content (%).

(2) Filtration of malt beverage

To the wort thus treated in section (2), degassed water was added, followed by filtration using a diatomaceous earth filter to obtain a completely non-alcoholic (alcohol content: 0% by weight) malt beverage having a sugar content adjusted to 4%.

Examples 2: Improvement in flavor

A malt beverage was obtained in the same way as in Example 1 and dissolved by the addition of linalool and acetaldehyde thereto at their respective concentrations shown blow to prepare samples.
Linalool concentration: 0, 1.2, 12, or 120 $\mu$m/L; and
Acetaldehyde concentration: 0, 1, 10, 50, or 100 mg/L.
Three expert panelists conducted sensory evaluation on the fermentation flavor of each sample according to the following criteria:

Criteria for judgment

0: Not perceived
1: Slightly perceived
2: Weakly perceived
3: Appropriately perceived
4: Slightly strongly perceived
5: Strongly perceived
6: Too strong

The evaluation results were indicated in the minimal value among the results of the panelists. In the evaluation, the scores "2" to "5" were regarded as being within tolerance; particularly, the scores "2" to "4" were regarded as being normal; and the score "3" was regarded as being particularly preferable.
The results are as shown in Table 1 below.
[Table 1]

| | | Acetaldehyde [mg/L] | | | | |
|---|---|---|---|---|---|---|
| | | 0 | 1 | 10 | 50 | 100 |
| Linalool [μg/l] | 0 | 0 | 0 | 4 | 5 | 6 |
| | 1.2 | 0 | 0 | 4 | 6 | 6 |
| | 12 | 0 | 1 | 3 | 6 | 6 |
| | 60 | 0 | 3 | 4 | 6 | 6 |
| | 120 | 3 | 3 | 5 | 6 | 6 |

From these results, a perceivable hop-derived floral flavor was increased with increase in linalool concentrations. In the absence of acetaldehyde, an appropriate fermentation flavor was obtained to a certain extent using the linalool, concentration of 120 μg/L,

Moreover, the same appropriate fermentation flavor as above or a stronger fermentation flavor was obtained even using 1 mg/L acetaldehyde and 60 or 120 μg/L linalool or 10 mg/L acetaldehyde and 0, 1.2, 12, or 60 μg/L linalool.

On the other hand, a fermentation flavor tended to be stronger when the acetaldehyde concentration was 50 mg/L or higher.

In these results, the score "3" in the evaluation was defined as an appropriate fermentation flavor. Among them, the linalool concentration of 12 μg/L and the acetaldehyde concentration of 10 mg/L are most desirable, resulting in excellent in balance of a fermentation flavor. In this case, the linalool concentration can be minimized from the viewpoint of obtaining a desirable fermentation flavor. In this regard, this case was desirable.

Example 3: Actually measured concentrations of linalool and acetaldehyde in malt beverage

A malt beverage was obtained in the same way as in Example 1 and dissolved by the addition of linalool and acetaldehyde thereto at their respective concentrations shown below to prepare samples.

Subsequently, actually measured values of the acetaldehyde and linalool concentrations in each sample were each determined according to measurement methods as shown below.

(a) Measurement method of acetaldehyde concentration

The acetaldehyde concentration in the malt beverage was measured using a Headspace gas chromatograph equipped with an FID detector.

10 ml of an ice-cold malt beverage was transferred to a Headspace sample bottle, to which 1 ml of an internal standard solution was then added. The bottle was sealed. The internal standard solution used was n-butanol diluted to 200 mg/L with ethanol. The sealed Headspace sample bottle was incubated at 40°C for 10 minutes using a Headspace autosampler. Then, the gas-phase portion was injected to a gas chromatograph. The acetaldehyde concentration was calculated from a calibration curve prepared in advance based on the peak area of the chromatogram. The calibration curve was prepared by injecting an acetaldehyde standard solution serially diluted with 4% ethanol to the gas chromatograph in the same way as in the measurement for the malt beverage.

In this context, the gas chromatograph measurement conditions were as follows:

Column: DB-1 (manufactured by Agilent Technologies); Length: 30 m,
Internal diameter: 0.32 mm, Membrane thickness: 5 μm
Injector temperature: 200°C
Detector: FID (manufactured by Shimadzu Corp.)
Detector temperature: 200°C
Column temperature: 40°C for. 3 min, 4°C/min, 90°C for
0 min, 20°C/min, 180°C for 2 min
Carrier gas: helium gas (50 cm/sec)

(b) Measurement method of linalool concentration

The concentration of linalool as a hop aroma ingredient in the malt beverage was measured using a commercially available GC/MS apparatus.

A C18 solid-phase column was used as a method of extracting the aroma ingredient in the beverage, and this extracted ingredient was subjected to GC/MS. Borneol and linalool were used as internal standards to perform quantification from the relative strengths of particular ions in borneol and linalool.

The GC/MS analysis conditions for the hop aroma ingredient were as follows:

GC/MS analysis conditions

Capillary column: HP-INNOWAX (trade name) (manufactured by Agilent Technologies) (length: 60 m, internal diameter: 0.25 mm, membrane thickness: 0.25 $\mu$m)

Oven temperature: 40°C for 0.3 min-3°C/min → 240°C for 20 min

Carrier gas: He, supply at low pressure 10 psi Transfer line temperature: 240°C

MS ion source temperature: 230°C

MSQ pole temperature: 150°C

Front inlet temperature: 200°C

Monitoring ion: m/z=93, 110

Ions used in quantification: Borneol m/z=110 Linalool m/z=69

The results are as shown in Tables 2 and 3 below.

[Table 2]

| Acetaldehyde (mg/L) | | | | | |
|---|---|---|---|---|---|
| Amount added | 0 | 1 | 10 | 50 | 100 |
| Concentration in product | 0.5 | 1.6 | 10.3 | 47.7 | 93.3 |

[Table 3]

| Linalool ($\mu$g/L) | | | | | |
|---|---|---|---|---|---|
| Amount added | 0 | 1.2 | 12 | 60 | 120 |
| Concentration in product | 0.6 | 1.2 | 13.1 | 59.7 | 121.3 |

Example 4:

The amount of the hop added and the boiling time after the hop addition in section "(1) Preparation of wort" in Example 1 were changed as shown in Table 4 below to obtain wort samples. A linalool concentration in each sample was measured in the same way as above. Moreover, a sample obtained using hop added in an amount of 1 g/L and a boiling time of 5 minutes was further supplemented with each concentration of hop essential oils (hop extracts) (hop essential oil fraction obtained by supercritical carbon dioxide extraction method (Hops and Hop Products the EBC Technology and Engineering Forum Nurnberg, p107-118, 1997)) shown in Table 4 to prepare samples. For these samples, a linalool concentration was also measured in the same way.

The results were as shown in Table 4 below.

[Table 4]

| | Timing of addition (minute later) | Amount added (g/L) | Test | | | | | | | | | | |
|---|---|---|---|---|---|---|---|---|---|---|---|---|---|
| | | | 1 | 2 | 3 | 4 | 5 | 6 | 7 | 8 | 9 | 10 | 11 |
| Hop | 5 Minutes later | 1 | | O | | | | | | O | O | O | O |
| | | 2 | | | O | | | | | | | | |

(continued)

|  | Timing of addition (minute later) | Amount added (g/L) | Test | | | | | | | | | | |
|---|---|---|---|---|---|---|---|---|---|---|---|---|---|
|  |  |  | 1 | 2 | 3 | 4 | 5 | 6 | 7 | 8 | 9 | 10 | 11 |
|  | 15 Minutes later | 2 |  |  |  | O |  |  |  |  |  |  |  |
|  | 85 Minutes later | 2 |  |  |  |  | O |  |  |  |  |  |  |
|  | In wort that was being left standing | 2 |  |  |  |  |  | O |  |  |  |  |  |
|  |  | 3 |  |  |  |  |  |  | O |  |  |  |  |
| Hop essential oil perfume | Cold wort | 0.0425 |  |  |  |  |  |  |  | O |  |  |  |
|  | Cold wort | 0.0850 |  |  |  |  |  |  |  |  | O |  |  |
|  | Cold wort | 0.1105 |  |  |  |  |  |  |  |  |  | O |  |
|  | Cold wort | 0.1275 |  |  |  |  |  |  |  |  |  |  | O |
| Analyzed value | Linalool concentration ($\mu$g/L) | | ND | ND | ND | ND | 21.6 | 72.3 | 97.1 | 35.6 | 71.2 | 92.6 | 106.8 |

## Claims

1. A method for producing an unfermented beer-flavored malt beverage, comprising adjusting linalool and acetaldehyde concentrations in a malt beverage to be improved in flavor to thereby impart or enhance a fermentation flavor in the beverage.

2. The method according to claim 1, wherein the fermentation flavor is imparted or enhanced in the beverage by adding linalool and acetaldehyde to the malt beverage to be improved in flavor.

3. The method according to claim 1 or 2, comprising adding linalool and acetaldehyde to the malt beverage to be improved in flavor such that the obtained malt beverage has linalool and acetaldehyde concentrations each effective for improvement in flavor.

4. The method according to any one of claims 1 to 3, comprising adjusting the linalool and acetaldehyde concentrations in the malt beverage to be improved in flavor such that the obtained malt beverage has linalool and acetaldehyde concentrations of 1 to 125 $\mu$g/L and 1 to 50 mg/L, respectively.

5. The method according to any one of claims 1 to 4, comprising adding linalool and acetaldehyde to the malt beverage to be improved in flavor such that the obtained malt beverage has linalool and acetaldehyde concentrations of 1 to 125 $\mu$g/L and 1 to 50 mg/L, respectively.

6. The method according to any one of claims 1 to 5, comprising adjusting the linalool and acetaldehyde concentrations such that the obtained malt beverage has linalool and acetaldehyde concentrations that each satisfy the following relations:

$$150Ln \geq -A + 10 \text{ and } 1000Ln \leq -3A + 150,$$

wherein
Ln represents a linalool concentration (mg/L) (Ln > 0) in the malt beverage, and
A represents an acetaldehyde concentration (mg/L) (A > 0) in the malt beverage.

7. The method according to any one of claims 1 to 6, comprising adjusting the linalool and acetaldehyde concentrations such that the obtained malt beverage has linalool and acetaldehyde concentrations of 11 to 13 $\mu$g/L and 9 to 11 mg/L, respectively.

8. The method according to any one of claims 1 to 7, comprising adjusting an amount of hop added to a wort and the timing of its addition during a process of preparing the wort used in the malt beverage to thereby adjust the amount of linalool derived from the hop, and then, optionally, further adding linalool, to the malt beverage to thereby adjust the linalool concentration of the malt beverage to be improved in flavor.

9. The method according to any one of claims 1 to 8, wherein the malt beverage to be improved in flavor is obtained by reducing a wort flavor from an unfermented wort.

10. An unfermented beer-flavored malt beverage produced by a method according to any one of claims 1 to 9.

11. An unfermented beer-flavored malt beverage having an imparted or enhanced fermentation flavor, wherein the unfermented beer-filavared malt beverage has linalool and acetaldehyde concentrations of 1 to 125 $\mu$g/L and 1 to 50 mg/L, respectively.

12. The unfermented beer-flavored malt beverage according to claim 11, wherein the linalool and acetaldehyde concentrations each satisfy the following relations:

$$150Ln \geq -A + 10 \text{ and } 1000Ln \leq -3A + 150,$$

wherein
Ln represents a linalool, concentration (mg/L) (Ln > 0) in the malt beverage, and
A represents an acetaldehyde concentration (mg/L) (A > 0) in the malt beverage.

13. A flavor improving agent which imparts a fermentation flavor to a beer-flavored malt beverage, the flavor improving agent comprising linalool and acetaldehyde.

14. The flavor improving agent according to claim 13, wherein the malt beverage is an unfermented malt beverage obtained by reducing a wort flavor from an unfermented wort.

| | | | |
|---|---|---|---|
| **INTERNATIONAL SEARCH REPORT** | | International application No. | |
| | | PCT/JP2010/050027 | |

A. CLASSIFICATION OF SUBJECT MATTER
*A23L2/00*(2006.01)i, *A23L2/38*(2006.01)i

According to International Patent Classification (IPC) or to both national classification and IPC

B. FIELDS SEARCHED

Minimum documentation searched (classification system followed by classification symbols)
A23L2/00, A23L2/38

Documentation searched other than minimum documentation to the extent that such documents are included in the fields searched
Jitsuyo Shinan Koho        1922-1996   Jitsuyo Shinan Toroku Koho   1996-2010
Kokai Jitsuyo Shinan Koho  1971-2010   Toroku Jitsuyo Shinan Koho   1994-2010

Electronic data base consulted during the international search (name of data base and, where practicable, search terms used)
JSTPlus/JMEDPlus/JST7580(JDreamII), Shokuhin Kanren Bunken Joho(Shoku Net),
Food Science and Technology, Abstracts/Foodline/Foods Adlibra(DIALOG)

C. DOCUMENTS CONSIDERED TO BE RELEVANT

| Category* | Citation of document, with indication, where appropriate, of the relevant passages | Relevant to claim No. |
|---|---|---|
| Y | JP 1-165358 A  (Heineken Technisch Beheer B.V.), 29 June 1989 (29.06.1989), & US 4957767 A          & EP 307052 A1 | 1-14 |
| Y | JP 58-121779 A  (Brauerei Feldschlosschen), 20 July 1983 (20.07.1983), & US 4661355 A        & GB 2112619 A & DE 3213056 A1        & FR 2519237 A1 | 1-14 |
| Y | FRITSCH T. Helge, et. al., Identification Based on Quantitative Measurements and Aroma Recombination of the Character Impact Odorants in a Bavarian Pilsner-type Beer., J. Agric. Food Chem., 2005, Vol.53, p.7544-7551 | 1-14 |

| ☒ Further documents are listed in the continuation of Box C. | ☐ See patent family annex. |
|---|---|

\*    Special categories of cited documents:
"A"   document defining the general state of the art which is not considered to be of particular relevance
"E"   earlier application or patent but published on or after the international filing date
"L"   document which may throw doubts on priority claim(s) or which is cited to establish the publication date of another citation or other special reason (as specified)
"O"   document referring to an oral disclosure, use, exhibition or other means
"P"   document published prior to the international filing date but later than the priority date claimed

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

| Date of the actual completion of the international search | Date of mailing of the international search report |
|---|---|
| 07 April, 2010 (07.04.10) | 20 April, 2010 (20.04.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2010/050027 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | KISHIMOTO Toru, et. al., Comparison of the Odor-Active Compounds in Unhopped Beer and Beers Hopped with Different Hop Varieties., J. Agric. Food Chem., 2006, Vol.54, p.8855-8861 | 1-14 |
| A | JP 2005-013142 A  (Asahi Breweries, Ltd.), 20 January 2005 (20.01.2005), (Family: none) | 1-14 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009002732 A
- JP S62272965 B
- JP H445777 B
- WO 2004018612 A
- JP 2003250503 A
- WO 2001520876 A
- WO 9921956 A
- JP 2004194590 A
- JP S62024851 B
- JP 2005013142 A

**Non-patent literature cited in the description**

- *Hops and Hop Products the EBC Technology and Engineering Forum Nurnberg,* 1997, 107-118